# EUROPÄISCHE PATENTSCHRIFT

(11) **EP 1 968 826 B1**
(45) Veröffentlichungstag und Bekanntmachung des Hinweises auf die Patenterteilung: **20.01.2010**
(21) Anmeldenummer: 06830021.9
(22) Anmeldetag: 16.11.2006
(51) Int. Cl.: B60S 1/34

(54) **BEFESTIGUNGSTEIL MIT ERHÖHTER TORSIONSSTEIFIGKEIT**
FASTENING PART WITH INCREASED TORSIONAL RIGIDITY
PIÈCE DE FIXATION AVEC RIGIDITÉ ACCRUE À LA TORSION

(30) Priorität: 28.12.2005 DE 102005062773
(43) Veröffentlichungstag der Anmeldung: 17.09.2008
(73) Patentinhaber: Robert Bosch GmbH, 70442 Stuttgart (DE)
(72) Erfinder: MAYER, Stephan, 77855 Achern (DE)
(86) Internationale Anmeldenummer: PCT/EP2006/068557
(87) Internationale Veröffentlichungsnummer: WO 2007/080017

(56) Entgegenhaltungen:
- EP-A2- 1 234 738
- DE-A1- 3 926 714
- DE-A1- 4 140 958
- GB-A- 2 311 209

## Beschreibung

### Stand der Technik

Die Erfindung betrifft ein Blechbefestigungsteil mit einem ersten Befestigungselement und einem zweiten Befestigungselement sowie eine Wischanlage mit einem Scheibenwischer und dem Blechbefestigungsteil.

Gussbefestigungsteile, wie sie beispielsweise bei Wischeranlagen mit einem oder mehreren Scheibenwischern für Kraftfahrzeuge eingesetzt werden, bestehen häufig aus Aluminium- oder Zinkdruckguss. Derartige Gussbefestigungsteile werden jedoch aus Kostengründen vermehrt durch Befestigungsteile aus Blech ersetzt. Allerdings weisen die Blechbefestigungsteile gegenüber den Gussbefestigungsteilen den Nachteil auf, dass sie eine geringere Torsionssteifigkeit haben. Die Blechbefestigungsteile, die durch Stanzen, Ziehen und Biegen in mehreren Schritten hergestellt werden, haben den Nachteil, dass eine Verrippung des Bauteils nicht möglich ist. Somit kann auf diese Weise die Torsionssteifigkeit des Bauteils nicht erhöht werden.

Blechbefestigungsteile können daher nur bei geringen Kröpfungen in Höhe bzw. bei geringem seitlichem Versatz eingesetzt werden. Eine Erhöhung der Torsionssteifigkeit durch eine Vergrößerung der Materialdicke ist aus Gründen der Umformung nur bedingt möglich. Die Vergrößerung der Stanzmaterialdicke hat darüber hinaus den Nachteil, dass das Bauteil wesentlich schwerer wird als ein Gussbefestigungsteil. Auch erhöhen sich die Kosten durch den größeren Materialbedarf.

Die DE 39 26 714 A1 zeigt ein Befestigungsteil mit den Merkmalen gemäß dem Oberbegriff des Anspruchs 1.

Aufgabe der Erfindung ist es, ein Befestigungsteil mit erhöhter Torsionssteifigkeit zu schaffen, wobei die beschriebenen Nachteile des Standes der Technik vermieden werden sollen.

### Vorteile der Erfindung

Das erfindungsgemäße Blechbefestigungsteil mit einem ersten Befestigungselement und einem zweiten Befestigungselement mit den Merkmalen des Patentanspruchs 1 weist demgegenüber den Vorteil auf, dass es über eine erhöhte Torsionssteifigkeit verfügt und gleichzeitig die Materialstärke des Blechbefestigungsteils, unverändert bleibt. Das erste und zweite Befestigungselement bilden eine formschlüssige oder kraftschlüssige Blechverbindung. Die beiden Befestigungselemente sind einstückig an den Seitenwänden des Blechbefestigungsteils angeordnet und im rechten Winkel aufeinander zugebogen. Dadurch entsteht aus der offenen Form des Blechbefestigungsteils an zumindest einem Bereich des Blechbefestigungsteils eine geschlossene Form. Durch diese Maßnahme eines teilweise geschlossenen Querschnitts wird die Torsionssteifigkeit des Blechteils erhöht. Dadurch ist es möglich, ein einstückiges Befestigungsteil aus Blech zu schaffen, das die gleiche oder eine verbesserte Torsionssteifigkeit aufweist wie ein Gussbefestigungsteil aus Alu- oder Zinkdruckguss. Das Blechbefestigungsteil ist aber deutlich preiswerter. Die formschlüssige Blechverbindung, die das erste und zweite Befestigungselement miteinander verbindet, hat den Vorteil, dass der Biegewinkel der Befestigungselemente zu den Seiten des Befestigungsteils auf 90° beschränkt ist. Dadurch wird die Gefahr einer Rissbildung verhindert, wie sie bei anderen Fertigungen, insbesondere beim Herstellen von Laschen mit Biegewinkeln deutlich größer 90°, vorherrscht. Alternativ kann auch eine kraftschlüssige Verbindung mittels Schweißen erfolgen.

Ferner ist an dem zweiten Befestigungsteil eine Zunge integral angeordnet. Die Zunge trägt zur weiteren Erhöhung der Versteifung gegen Torsionskräfte bei. Die Zunge weist bevorzugt eine im Wesentlichen stufenförmige Form auf. Die am zweiten Befestigungselement angeformte Zunge ist von der Oberseite des Blechbefestigungsteils zu dessen Unterseite hin gebogen und verläuft im Wesentlichen parallel zur Unterseite des Blechbefestigungsteils. Dadurch entsteht eine nach unten weisende Stufe, die zu einer Erhöhung der Steifigkeit des gesamten Blechbefestigungsteils beiträgt. An Stelle einer Stufe kann auch ein abgerundeter oder wellenförmiger Übergang realisiert sein. Auch ist es möglich, eine Sicke auszubilden, welche die Versteifung verbessert.

Zusätzlich hat das Blechbefestigungsteil eine erste Seitenwand und eine zweite. Seitenwand, die voneinander beabstandet und im Wesentlichen parallel verlaufen. Die Zunge des zweiten Befestigungselements ist zwischen den beiden Seitenwänden angeordnet. Die Torsionssteifigkeit wird durch die vergrößerte geschlossene Form (Querschnitt) erhöht.

Ferner hat die Zunge einen seitlichen Vorsprung, der in eine Ausnehmung in der ersten Seitenwand des Blechbefestigungsteils eingreift. Dieser Vorsprung stellt eine zusätzliche Fixierung der Zunge im bzw. zwischen den Seitenwänden des Blechbefestigungsteils dar. Er ist fertigungstechnisch sehr einfach zu realisieren. Es ist nicht möglich, dass sich die Zunge aus der angegebenen Stellung heraus bewegt, insbesondere, wenn hohe Zugkräfte auf die Federeinhängung bzw. auf das Blechbefestigungsteil wirken. Die Zunge wird durch den in der Ausnehmung fixierten Vorsprung in ihrer Position gehalten.

Die Unteransprüche zeigen bevorzugte Weiterbildungen der Erfindung.

Besonders bevorzugt ist die formschlüssige Blechverbindung zwischen dem ersten Befestigungselement und dem zweiten Befestigungselement eine verzahnte Verbindung. Die verzahnte Verbindung ist insbesondere als Schwalbenschwanzverbindung ausgebildet. Durch die Verzahnung der beiden Befestigungselemente wird ein besserer Halt realisiert. Die Befestigungselemente werden auf einfache Weise miteinander verbunden. Beim Umbiegen der Befestigungselemente aus der Vertikalen in die Horizontale können die einzelnen Zähne der verzahnten Verbindung bzw. die Schwalbenschwänze der Schwalbenschwanzverbindung auf einfache Weise ineinander greifen. Die Torsionssteifigkeit einer solchen Verbindung ist besonders ausgeprägt.

In einer besonders ausgestalteten Ausführungsform hat das Blechbefestigungsteil eine erste Öffnung zur Aufnahme eines Wischerarmgelenks und wenigstens eine zweiten Öffnung zur Aufnahme einer Wischerlagerwelle. Das Befestigungsteil verbindet somit das Wischerarmgelenk mit der Wischerlagerwelle. Dabei ist es besonders wichtig, dass das Blechbefestigungsteil eine hohe Torsionssteifigkeit aufweist Dies wird durch die einstückige Ausbildung, durch die insbesondere formschlüssige Blechverbindung der beiden Befestigungselemente und den geschlossenen Querschnitt sowie die zwischen den Seitenwänden angeordnete Zunge gewährleistet.

Weiter vorteilhaft weist die Zunge des Blechbefestigungsteils eine Federlasche zur Aufnahme eines Federelements für einen Wischerarm auf Die auf die Federlasche auftreffenden Kräfte vom Federelement des Wischerarms werden dabei auf die Zunge des Blechbefestigungsteils übertragen. Die Zunge hat jedoch eine hohe Steifigkeit, insbesondere, wenn sie eine zusätzliche Versteifung in Form einer Stufe oder Sicke hat. Besonders bevorzugt ist dabei eine Ausführungsform, bei der die Federlasche integral in der Zunge angeordnet ist. Dazu wird in die Zunge eine Lochstanzung vorgenommen, wobei das ausgestanzte Material an einer Seite mit der Zunge verbunden ist. Die sich daraus ergebende kleine Zunge wird so umgeformt, dass eine Federlasche entsteht Durch die integrale Ausbildung den Federlasche in der Zunge können die auftretenden Federkräfte besonders gut auf die Zunge übertragen werden. Die Gefahr des Verbiegens der Federtasche durch die angreifenden Kräfte wird deutlich vermindert, insbesondere in Extremstellungen des Wischerarms. Zusätzlich erweist es sich für den Fertigungsprozess als vorteilhaft, wenn die Zunge und die Federlasche aus einem Material ausgebildet sind. Die Federlasche ist dann besonders stabil. Es müssen keine Verbindungen zwischen Zunge und Federlasche ausgebildet werden; die eine Schwachstelle des Befestigungsteils bilden würden.

Weiter vorteilhaft weist die Zunge einen zweiten Vorsprung auf, der in eine zweite Ausnehmung in der zweiten Seitenwand greift. Somit wird die Zunge zusätzlich durch den zweiten Vorsprung fixiert. Der Halt der Zunge wird verbessert, was letztendlich eine hohe Zuverlässigkeit der Torsionsversteifung des Blechbefestigungsteils garantiert.

Insbesondere wird eine Bewegung der Zunge nach oben oder eine Verformung der Zunge durch die Vorsprünge zuverlässig verhindert.

Bevorzugt sind der erste und/oder der zweite Vorsprung der Zunge auf einer Linie angeordnet, die sich in Zugrichtung einer an der Federlasche angreifenden Kraft hinter der Federlasche befindet. Dabei sind die Vorsprünge jedoch recht nahe am Kraftangriffspunkt eines Federelements an der Federlasche ausgebildet. Eine auf die Federlasche wirkende Zugkraft wird ebenfalls als Zugkraft auf die Zunge übertragen.

Vorteilhafterweise sind die erste und/oder zweite Ausnehmung in der ersten und/oder zweiten Seitenwand im Wesentlichen rechteckig ausgebildet. Der erste und/oder zweite Vorsprung der Zunge weisen eine zu der Ausnehmung korrespondierende Form auf. Sie sind ebenfalls rechteckig. Eine derartige Ausnehmung oder ein solches rechteckiges Loch kann auf einfache Weise hergestellt werden, z.B. durch Stanzen. Es bietet einen guten Halt für den Vorsprung der Zunge. Die Form der Ausnehmung kann somit an die Form der Seitenwand angepasst werden, so dass genügend Material um die Ausnehmung herum verbleibt und die Gefahr eines Herausbrechens des Vorsprungs aus der Ausnehmung vermindert wird.

Besonders vorteilhaft lässt sich das Blechbefestigungsteil in einem Folgeverbundwerkzeug herstellen. Dazu wird das einstückige Blechbefestigungsteil in einer Aufspannung während des gesamten Produktionsprozesses gehalten. In der Produktion werden zuerst die Stanzungen vorgenommen, d.h., die grobe Form des Blechbefestigungsteils wird aus einem flachen Blech ausgestanzt. Ebenso werden die vorgesehenen Löcher und Ausnehmungen des Blechbefestigungsteils gestanzt. In einem zweiten Schritt werden die Seitenteile und andere herausstehende Teile wie beispielsweise ein Kragen um eine Öffnung in einem Ziehprozess herausgearbeitet. Im dritten Schritt werden die Abkantungen und Umbiegungen vorgenommen. Somit können mehrere Verarbeitungsschritte an dem Teil nacheinander ausgeführt werden, ohne das Teil aus dem Werkzeug entnehmen zu müssen, Dies ist unter herstellungstechnischen Gesichtspunkten besonders vorteilhaft.

### Zeichnung

Die Erfindung wird nachfolgend anhand von bevorzugten Ausführungsbeispielen im Detail beschrieben. In der Zeichnung ist:
- Figur 1: eine perspektivische Ansicht eines Blechbefestigungsteils; und
- Figur 2: eine Draufsicht des Befesfigungsteils aus Fig. 1.

### Beschreibung des Ausführungsbeispiels

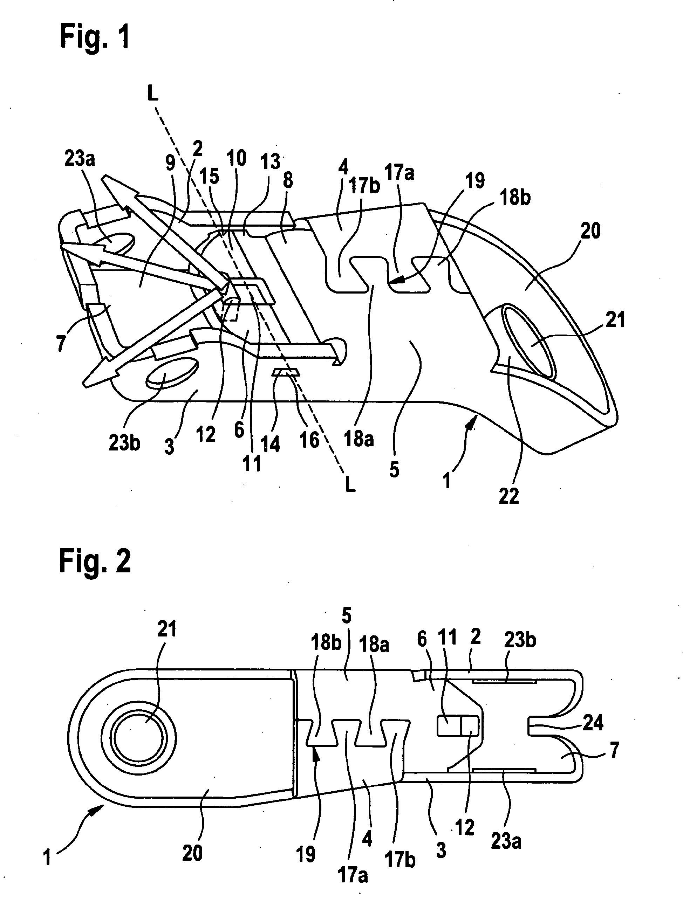

Nachfolgend wird unter Bezugnahme auf Figur 1 und 2 das erfindungsgemäße Blechbefestigungsteil 1 im Detail erläutert Das Blechbefestigungsteil 1 weist an seinen Seiten eine erste Seitenwand 2 und eine zweite Seitenwand 3 auf.

Die erste Seitenwand 2 und die zweite Seitenwand 3 sind Teil eines umlaufenden wandförmigen Randes des Blechbefestigungsteils 1. An der ersten Seitenwand 2 ist ein

### Beschreibung des Ausführungsbeispiels

Nachfolgend wird unter Bezugnahme auf Figur 1 und 2 das erfindungsgemäße Blechbefestigungsteil 1 im Detail erläutert. Das Blechbefestigungsteil 1 weist an seinen Seiten eine erste Seitenwand 2 und eine zweite Seitenwand 3 auf.

Die erste Seitenwand 2 und die zweite Seitenwand 3 sind Teil eines umlaufenden wandförmigen Randes des Blechbefestigungsteils 1. An der ersten Seitenwand 2 ist ein erstes Befestigungselement 4 einstückig angeformt. Das erste Befestigungselement 4 ist um 90° abgewinkelt und weist in Richtung der zweiten Seitenwand 3.

An der zweiten Seitenwand 3 ist ein zweites Befestigungselement 5 einstückig angeformt. Das zweite Befestigungselement 5 ist um 90° abgewinkelt und weist in Richtung der ersten Seitenwand 2. An dem zweiten Befestigungselement 5 ist eine Zunge 6 integral angeformt. Die Zunge 6 weist in Richtung des ersten Endes 7 des Blechbefestigungsteils 1. Die Zunge 6 hat eine Abstufung 8. Dadurch verläuft die Zunge 6 mit ihrem freien Ende 10 im Wesentlichen parallel zur Unterseite 9 des Blechbefestigungsteils 1. Es sei jedoch angemerkt, dass die Zunge 6 nicht unbedingt parallel zur Unterseite verlaufen muss.

Im Bereich des freien Endes 10 der Zunge 6 ist eine Aussparung 11 angeordnet. Die Aussparung 11 ist durch Ausstanzung entstanden. Das Material der Aussparung 11 ist in das Innere des Blechbefestigungsteils umgebogen und mit der Zunge 6 einstückig verbunden. Dadurch wird eine Federlasche 12 gebildet.

Die Zunge 6 weist an ihren beiden Seiten im Bereich des freien Endes 10 einen ersten und zweiten Vorsprung 13 und 14 auf. Der erste Vorsprung 13 greift in eine erste Ausnehmung 15 der ersten Seitenwand 2 ein. Der zweite Vorsprung 14 greift in eine zweite Ausnehmung 16 der zweiten Seitenwand 3 ein. Die Zunge 6 wird sowohl zwischen der ersten Seitenwand 2 und der zweiten Seitenwand 3 als auch in der ersten Ausnehmung 15 und in der zweiten Ausnehmung 16 gehalten. Dadurch wird die Stabilität des Blechbefestigungsteils 1 deutlich erhöht. Gleichzeitig wird die Torsionssteifigkeit des Blechbefestigungsteils 1 verbessert. Die Vorsprünge 13, 14 der Zunge 6 befinden sich auf gleicher Höhe auf einer Linie L. Die Vorsprünge 13, 14 sind in Kraftrichtung einer nicht dargestellten, an der Federlasche 12 angreifenden Feder hinter der Federlasche 12 versetzt angeordnet. Auf die Federlasche 12 einwirkende Zugkräfte treten ebenfalls nur als Zugkräfte an den Vorsprüngen 13, 14 auf. Die Pfeile in Figur 1 deuten die Kraftangriffspunkte bzw. Kraftrichtungen an der Federlasche 12 an.

Das erste Befestigungselement 4 und das zweite Befestigungselement 5 weisen jeweils zwei Zähne 17a, 17b bzw. 18a, 18b auf. Die Zähne 17a, 17b und 18a, 18b greifen ineinander und bilden eine Schwalbenschwanzverbindung 19. Die Schwalbenschwanzverbindung 19 ist besonders stabil und für die Aufnahme von Torsionskräften und Momenten besonders geeignet. Auch ist es durch die Zähne 17a, 17b und 18a, 18b, die die Schwalbenschwanzverbindung 19 bilden, möglich, im Fertigungsprozess durch einfaches Umbiegen des ersten Befestigungselements 4 und zweiten Befestigungselements 5 die Verbindung herzustellen. Dies kann in einem Fertigungsgang erfolgen. Im Bereich der Befestigungselemente 4, 5 und der Zunge 6 weist das Blechbefestigungsteil somit einen geschlossenen Querschnitt auf.

Im Bereich eines zweiten Endes 20 des Blechbefestigungsteils 1 ist eine erste Öffnung 21 vorgesehen. Die erste Öffnung 21 weist einen konusförmigen Kragen 22 auf, dessen Höhe geringer ist als die Höhe der ersten Seitenwand 2 bzw. der zweiten Seitenwand 3. Die erste Öffnung 21 im Bereich des ersten Endes 7 des Blechbefestigungsteils 1 ist zur Aufnahme einer nicht dargestellten Wischerlagerwelle vorgesehen.

Im Bereich des ersten Endes 7 des Blechbefestigungsteils 1 sind zwei Öffnungen 23a, 23b vorgesehen. Die erste Öffnung 23a ist in der ersten Seitenwand 2 ausgebildet; die zweite Öffnung 23b in der zweiten Seitenwand 3. Die Öffnungen 23a, 23b nehmen eine nicht dargestellte Buchse eines Wischerarmgelenks auf. An dem Wischerarmgelenk ist ein ebenfalls nicht dargestelltes Federelement befestigt, das an der Federlasche 12 des Blechbefestigungsteils 1 angreift.

Figur 2 zeigt eine schematische Zeichnung des Blechbefestigungsteils 1 von oben. Deutlich zu erkennen ist die Schwalbenschwanzverbindung 19 des ersten Befestigungselements 4 und des zweiten Befestigungselements 5. Die Zunge 6 ist zwischen der ersten Seitenwand 2 und der zweiten Seitenwand 3 angeordnet. Die Vorsprünge 13, 14 greifen in die entsprechenden Ausnehmungen 15, 16 ein, die in der Figur 2 nur andeutungsweise zu erkennen sind. Am ersten Ende 7 des Blechbefestigungsteils 1 ist eine Einkerbung 24 in der Unterseite 9 des Blechbefestigungsteils 1 zu erkennen.

## Patentansprüche

1. Blechbefestigungsteil zur Befestigung eines Wischers, mit einem ersten Befestigungselement (4) und einem zweiten Befestigungselement (5), die mit einer formschlüssigen Blechverbindung oder einer kraftschlüssigen Blechverbindung miteinander verbunden sind, um an einem Bereich des Blechbefestigungsteils einen geschlossenen Querschnitt bereitzustellen, wobei am zweiten Befestigungselement (5) eine Zunge (6) integral gebildet ist, wobei insbesondere die Zunge (6) eine Abstufung (8) aufweist, und wobei das Blechbefestigungsteil (1) eine erste Seitenwand (2) und eine zweite Seitenwand (3) hat, die voneinander beabstandet und im Wesentlichen parallel sind, und die Zunge (6) zwischen der ersten Seitenwand (2) und der zweiten Seitenwand (3) angeordnet ist, **dadurch gekennzeichnet, dass** die Zunge (6) einen ersten seitlichen Vorsprung (13) aufweist, der in eine erste Ausnehmung (15) in der ersten Seitenwand (2) eingreift.

2. Blechbefestigungsteil nach Anspruch 1, **dadurch gekennzeichnet, dass** die formschlüssigen Blechverbindung eine verzahnte Verbindung, insbesondere eine Schwalbenschwanzverbindung (19), ist.

3. Blechbefestigungsteil nach Anspruch 1 oder 2, **dadurch gekennzeichnet, dass** das Blechbefestigungsteil (1) eine erste Öffnung (21) zur Aufnahme einer Wischerlagerwelle und wenigstens eine zweite Öffnung (23a, 23b) zur Aufnahme eines Wischerarmgelenks hat.

4. Blechbefestigungsteil nach einem der vorhergehenden Ansprüche, **dadurch gekennzeichnet, dass** die Zunge (6) eine Federlasche (12) zur Aufnahme einer Federelements für einen Wischerarm aufweist.

5. Blechbefestigungsteil nach Anspruch 1, **dadurch gekennzeichnet, dass** die Zunge (6) einen zweiten seitlichen Vorsprung (14) aufweist, der in eine zweite Ausnehmung (16) in der zweiten Seitenwand (3) eingreift.

6. Blechbefestigungsteil nach Anspruch 1 und/oder 5, **dadurch gekennzeichnet, dass** die erste und/oder zweite Ausnehmung (15, 16) in der ersten und/oder zweiten Seitenwand (2, 3) im Wesentlichen rechteckig ausgebildet ist und der erste und/oder zweite Vorsprung (13, 14) der Zunge (6) dazu korrespondierend geformt ist.

7. Blechbefestigungsteil nach einem der vorhergehenden Ansprüche, **dadurch gekennzeichnet, dass** das Blechbefestigungsteil (1) in einem Folgeverbundwerkzeug herstellbar ist.

8. Wischeranlage mit einem Scheibenwischer und dem Blechbefestigungsteil (1) nach einem der vorhergehenden Ansprüche.

## Claims

1. Sheet-metal fastening part for the fastening of a wiper, with a first fastening element (4) and a second fastening element (5) which are connected to each other by a form-fitting sheet-metal connection or a frictional sheet-metal connection in order to provide a closed cross section on a region of the sheet-metal fastening part, wherein a tongue (6) is integrally formed on the second fastening element (5), wherein in particular the tongue (6) has a step (8), and wherein the sheet-metal fastening part (1) has a first side wall (2) and a second side wall (3) which are spaced apart from each other and are substantially parallel, and the tongue (6) is arranged between the first side wall (2) and the second side wall (3), **characterized in that** the tongue (6) has a first lateral projection (13) which engages in a first recess (15) in the first side wall (2).

2. Sheet-metal fastening part according to Claim 1, **characterized in that** the form-fitting sheet-metal connection is a toothed connection, in particular a dovetail joint (19).

3. Sheet-metal fastening part according to Claim 1 or 2, **characterized in that** the sheet-metal fastening part (1) has a first opening (21) for receiving a wiper bearing shaft, and at least one second opening (23a, 23b) for receiving a wiper arm joint.

4. Sheet-metal fastening part according to one of the preceding claims, **characterized in that** the tongue (6) has a spring tab (12) for receiving a spring element for a wiper arm.

5. Sheet-metal fastening part according to Claim 1, **characterized in that** the tongue (6) has a second lateral projection (14) which engages in a second recess (16) in the second side wall (3).

6. Sheet-metal fastening part according to Claim 1 and/or Claim 5, **characterized in that** the first and/or second recess (15, 16) in the first and/or second side wall (2, 3) are/is of substantially rectangular design, and the first and/or second projection (13, 14) of the tongue (6) are/is shaped in a manner corresponding thereto.

7. Sheet-metal fastening part according to one of the preceding claims, **characterized in that** the sheet-metal fastening part (1) is producible in a progressive die.

8. Wiper system with a window wiper and the sheet-metal fastening part (1) according to one of the preceding claims.

## Revendications

1. Pièce de fixation en tôle pour la fixation d'un essuie-glace, comprenant un premier élément de fixation (4) et un deuxième élément de fixation (5) qui sont connectés l'un à l'autre par une connexion de tôle par engagement par correspondance géométrique ou par engagement par force, afin de fournir une section transversale fermée au niveau d'une région de la pièce de fixation en tôle, une langue (6) étant formée intégralement sur le deuxième élément de fixation (5), la langue (6) présentant notamment un gradin (8) et la pièce de fixation en tôle (1) ayant une première paroi latérale (2) et une deuxième paroi latérale (3) qui sont espacées l'une de l'autre et qui sont essentiellement parallèles, et la langue (6) étant disposée entre la première paroi latérale (2) et la deuxième paroi latérale (3), **caractérisée en ce que** la langue (6) présente une première saillie latérale (13) qui vient en prise dans un premier évidement (15) dans la première paroi latérale (2).

2. Pièce de fixation en tôle selon la revendication 1, **caractérisée en ce que** la connexion de tôle par engagement par correspondance géométrique est une connexion dentée, notamment une connexion en queue d'aronde (19).

3. Pièce de fixation en tôle selon la revendication 1 ou 2, **caractérisée en ce que** la pièce de fixation en tôle (1) a une première ouverture (21) pour recevoir un arbre de palier d'essuie-glace et au moins une deuxième ouverture (23a, 23b) pour recevoir une articulation de bras d'essuie-glace.

4. Pièce de fixation en tôle selon l'une quelconque des revendications précédentes, **caractérisée en ce que** la langue (6) présente une patte élastique (12) pour recevoir un élément de ressort pour un bras d'essuie-glace.

5. Pièce de fixation en tôle selon la revendication 1, **caractérisée en ce que** la langue (6) présente une deuxième saillie latérale (14) qui vient en prise dans un deuxième évidement (16) dans la deuxième paroi latérale (3).

6. Pièce de fixation en tôle selon la revendication 1 et/ou 5, **caractérisée en ce que** le premier et/ou deuxième évidement (15, 16) est réalisé dans la première et/ou deuxième paroi latérale (2, 3) de manière essentiellement rectangulaire et la première et/ou deuxième saillie (13, 14) de la langue (6) est formée de manière à correspondre avec celui-ci.

7. Pièce de fixation en tôle selon l'une quelconque des revendications précédentes, **caractérisée en ce que** la pièce de fixation en tôle (1) peut être fabriquée dans un outil composite progressif.

8. Installation d'essuie-glace comprenant un essuie-glace et la pièce de fixation en tôle (1) selon l'une quelconque des revendications précédentes.
